# FASCICULE DE BREVET EUROPEEN

(11) **EP 0 452 169 B1**
(45) Date de publication et mention de la délivrance du brevet: **27.04.1994**
(21) Numéro de dépôt: 91400686.1
(22) Date de dépôt: 13.03.1991
(51) Int. Cl.: F16F 13/00

(54) **Perfectionnements apportés aux manchons antivibratoires hydrauliques**
Verbesserungen zu hydraulischen Antischwingungsbuchsen
Improvements to hydraulic anti-vibration bushes

(30) Priorité: 16.03.1990 FR 9003416
(43) Date de publication de la demande: 16.10.1991
(73) Titulaire: HUTCHINSON, F-75008 Paris (FR)
(72) Inventeur: Bouhier, Bernard, F-18100 Vierzon (FR); Domer, Michel, F-60790 Valdampierre (FR)
(74) Mandataire: Behaghel, Pierre

(56) Documents cités:
- PATENT ABSTRACTS OF JAPAN vol. 8, no. 140 (M-305)(1577) 29 juin 1984,& JP-A-59 37349 (TOUKAI GOMU KOGYO KK) 29 février 1984,
- PATENT ABSTRACTS OF JAPAN vol. 8, no. 146 (M-307)(1583) 7 juillet 1984,& JP-A-59 43239 (TOUKAI GOMU KOGYO KK) 10 mars 1984,
- PATENT ABSTRACTS OF JAPAN, vol. 11, no. 120 (M-580)(2567), avril 1987 & JP-A-61-262244

## Description

L'invention est relative aux manchons antivibratoires hydrauliques comprenant deux armatures rigides tubulaires d'axe X s'entourant l'une l'autre et réunies entre elles par un corps en élastomère conformé de façon à former avec celles-ci au moins deux poches étanches opposées diamétralement selon une direction Y perpendiculaire à l'axe X et communiquant entre elles par un canal étroit, l'ensemble desdites poches et dudit canal étant rempli de liquide.

De tels manchons sont destinés à être montés aux fins de liaison -voire de support proprement dit- et d'amortissement entre deux pièces rigides solidarisables respectivement avec les deux armatures et susceptibles de subir l'une par rapport à l'autre des oscillations orientées selon la direction diamétrale Y, l'ensemble étant agencé de façon telle que, pour certaines au moins de ces oscillations, le liquide soit refoulé alternativement de l'une des poches vers l'autre et inversement à travers le canal étroit, ce qui crée dans ce liquide, pour une fréquence donnée des oscillations dépendant des cotes dudit canal, un phénomène de résonance propre à amortir la transmission de ces oscillations de l'une des armatures à l'autre.

Les manchons du genre en question sont par exemple destinés à être interposés entre, d'une part, un châssis ou caisse de véhicule et, d'autre part, le moteur à combustion interne ou le train avant ou arrière de ce véhicule.

L'invention concerne plus particulièrement, parmi les manchons ci-dessus, ceux qui sont destinés à exercer l'effet d'amortissement signalé entre les deux armatures tubulaires, non seulement selon la direction diamètrale Y, mais aussi selon la direction axiale X.

Il a été proposé à cet effet de former à une extrémité axiale du manchon une chambre annulaire délimitée respectivement par des prolongements des deux armatures tubulaires, par le corps intermédiaire en élastomère et par une paroi élastique résistante à la compression axiale et interposée axialement entre les prolongements ci-dessus, cette chambre étant reliée par un canal étroit à une chambre déformable et l'ensemble de ces deux chambres et du canal qui les reunit étant rempli de liquide (brevet JP n° 59-37 349).

Dans cette construction, la chambre annulaire est du type des "chambres de travail", c'est-à-dire est délimitée en partie par une paroi travaillant élastiquement et il en est de même des poches du manchon, ce qui présente l'inconvénient de créer une interférence entre les deux types d'amortissement assurés par le manchon selon respectivement les deux directions X et Y.

En d'autres termes, une déformation radiale du manchon selon la direction Y peut entraîner non seulement des transferts de liquide amortisseur selon cette direction Y, mais aussi des transferts de ce liquide selon la direction axiale X, tendant à perturber la liaison axiale établie entre les deux armatures alors même qu'aucune oscillation relative n'est appliquée selon cette direction axiale entre ces armatures.

Cet effet d'interférence peut également être observé inversement si une déformation purement axiale est appliquée sur le dispositif, cette déformation pouvant avoir des implications sur son comportement radial.

L'invention a pour but, surtout, de supprimer cet inconvénient en assurant de manière indépendante l'un de l'autre les amortissements effectués selon respectivement les deux directions X et Y.

A cet effet, les manchons du genre en question selon l'invention sont caractérisés en ce que la chambre déformable est une chambre de compensation annulaire disposée à l'autre extrémité axiale du manchon et délimitée par le corps intermédiaire en élastomère, par des prolongements des deux armatures tubulaires et par une membrane flexible annulaire n'opposant qu'une résistance négligeable à la déformation, membrane qui relie entre eux les deux prolongements.

Dans des modes de réalisation avantageux, on a recours en outre à l'une et/ou à l'autre des dispositions suivantes :
- les poches sont au nombre de quatre, réparties autour de l'axe X et les poches diamétralement opposées sont reliées deux à deux par des canaux étroits,
- l'une au moins des poches est reliée à la chambre de compensation par un canal étroit,
- l'armature tubulaire interne est constituée par deux tronçons de tube emmanchés jointivement l'un dans l'autre et les différents canaux étroits sont constitués par des rainures évidées dans l'une des deux faces cylindriques juxtaposées des deux tronçons de tube, rainures raccordées à leurs extrémités à des trous radiaux évidés dans le tronçon tubulaire extérieur,
- le tronçon tubulaire dans lequel sont évidées les rainures est le tronçon intérieur.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation de l'invention en se référant au dessin ci-annexé d'une manière bien entendu non limitative.

Les figures 1 et 2, de ce dessin, montrent un manchon antivibratoire hydraulique établi selon l'invention respectivement en coupe axiale selon I-I, figure 2 et en coupe transversale selon II-II figure 1.

La figure 3 est une coupe transversale analogue à celle de la figure 2 d'une variante de manchon antivibratoire hydraulique également conforme à l'invention.

La figure 4 montre en perspective l'un des composants de cette variante.

Dans chaque cas, le manchon comprend :
- une armature métallique tubulaire interne de révolution 1,
- une armature métallique tubulaire externe de révolution 2 qui entoure l'armature 1 et qui, pour l'état de repos du manchon, est coaxiale à cette armature 1, l'axe commun X à ces deux armatures étant orienté verticalement,
- et un corps en élastomère 3 reliant l'une à l'autre les deux armatures 1 et 2 en ménageant entre celles-ci deux poches étanches A et B diamétralement opposées selon une direction horizontale Y.

L'armature interne 1 est destinée à être solidarisée avec une broche (non représentée) qui la traverse jointivement alors que l'armature externe 2 est destinée à être solidarisée avec un palier (non représenté), cette broche et ce palier étant solidaires respectivement des deux éléments rigides entre lesquels on désire monter un support antivibratoire, éléments tels qu'un train de suspension de véhicule et que le châssis ou caisse de ce véhicule.

Les deux poches A et B sont réunies entre elles par un canal étroit 4 et ces deux poches ainsi que ce canal sont remplis d'un liquide amortisseur.

Dans les modes de réalisation illustrés, le canal 4 est réalisé de la façon suivante.

L'armature tubulaire interne 1 est composée de deux tronçons de tube, l'un intérieur 1₁ et l'autre extérieur 1₂ emmanchés jointivement l'un dans l'autre et le canal 4 est essentiellement constitué par une gorge semi-cylindrique 4₁ évidée dans la face cylindrique externe du tronçon tubulaire interne 1₁, cette gorge étant coiffée par la portion en regard de la face cylindrique interne du tronçon tubulaire externe 1₂ et ses deux extrémités sont raccordées à deux trous radiaux 4₂, diamétralement alignés, évidés dans le tronçon tubulaire externe 1₂ et débouchant respectivement dans les deux poches A et B.

La fixation du tronçon tubulaire intérieur 1₁ dans le tronçon tubulaire extérieur 1₂ est avantageusement effectuée par un effet de sertissage, en rabattant vers l'extérieur sur les extrémités du tronçon extérieur les extrémités amincies 20 du tronçon intérieur.

Avec un tel manchon, comme on le sait, les oscillations relatives appliquées selon la direction Y sur l'une des deux armatures tubulaires 1 et 2 se traduisent par des refoulements alternatifs du liquide amortisseur dans le canal 4 et, pour une valeur bien déterminée de la fréquence de ces oscillations, qui dépend essentiellement des cotes du canal 4, la colonne de liquide présente dans ce canal est mise en résonance et les débattements alternatifs qui en résultent ont pour effet d'empêcher ou tout au moins d'atténuer fortement la transmission des oscillations considérées entre les deux armatures.

Il peut être intéressant dans certains cas d'obtenir un amortissement du genre de celui qui vient d'être décrit non seulement selon la direction Y, mais également selon au moins une autre direction et en particulier selon la direction de l'axe X.

C'est par exemple le cas lorsqu'on désire amortir les mouvements relatifs, dits de "galop", appliqués sur certains trains de suspension de véhicules, et dont les trajectoires s'étendent selon des ellipses situées dans des plans verticaux longitudinaux de ces véhicules, et non selon de simples tronçons de droite verticaux.

A cet effet, on forme à l'extrémité axiale supérieure du manchon une chambre annulaire C délimitée intérieurement par un prolongement axial 5 de l'armature tubulaire interne 1, axialement par respectivement le corps en élastomère 3 et une collerette rigide 6 prolongeant radialement vers l'extérieur l'extrémité du prolongement 5, et extérieurement par une paroi élastique 7 résistante à la compression axiale, interposée axialement entre le bord de la collerette 6 et une autre collerette 8 prolongeant radialement vers l'extérieur l'extrémité correspondante de l'armature tubulaire externe 2.

La paroi élastique 7 présente avantageusement une forme sensiblement cylindrique de révolution, avec au moins une rondelle de raidissement extérieure 9 venue de moulage avec elle.

On prévoit en outre, conformément à l'invention, une chambre "de compensation", c'est-à-dire délimitée au moins en partie par une membrane flexible ou "soufflet" présentant une très faible résistance à la déformation, on relie la chambre annulaire C à cette chambre de compensation par un canal étroit et on remplit de liquide l'ensemble formé par ledit canal et par les deux chambres qu'il réunit.

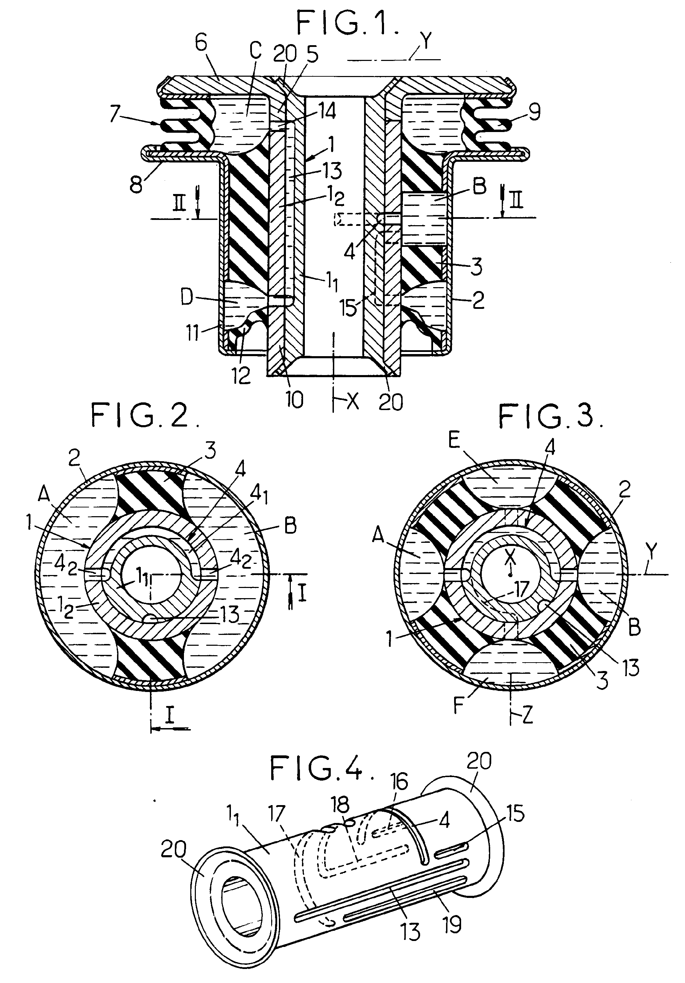

Dans le premier mode de réalisation illustré sur les figures 1 et 2, la chambre de compensation est une chambre annulaire D prévue à l'extrémité axiale inférieure du manchon et délimitée intérieurement par un prolongement axial 10 de l'armature tubulaire interne 1, extérieurement par un prolongement axial 11 de l'armature tubulaire externe 2 et axialement par respectivement le corps en élastomère 3 et par la membrane flexible ou "soufflet" 12 qui est ici annulaire et relie de façon étanche entre eux les deux prolongements 10 et 11.

Le canal étroit prévu pour relier entre elles les deux chambres annulaires C et D est ici désigné par la référence 13.

Dans le mode de réalisation illustré sur les dessins, le canal étroit 13 est constitué, comme le canal 4, par une rainure longitudinale évidée dans la face cylindrique externe du tronçon tubulaire interne 1₁ ci-dessus, les deux extrémités de cette rainure étant raccordées à deux lumières 14 évidées radialement dans le tronçon tubulaire externe 1₂ et débouchant respectivement dans les deux chambres C et D.

Avec une telle construction, les oscillations relatives appliquées axialement sur l'une des armatures tubulaires 1 et 2 par rapport à l'autre se traduisent encore par des refoulements alternatifs de liquide dans le canal étroit 13 et, pour une valeur prédéterminée de la fréquence desdites oscillations, la colonne de liquide contenue dans ce canal est sujette à un effet de résonance qui assure une filtration efficace de ces oscillations.

Cet amortissement "axial" est ici assuré d'une manière totalement indépendante de l'amortissement "radial" décrit ci-dessus, ce qui permet de régler avec précision chacun de ces deux comportements.

En outre, à la différence de ce que l'on observe pour les oscillations radiales ci-dessus, orientées selon la direction Y et faisant intervenir les deux poches identiques A et B, les deux chambres annulaires C et D ne jouent pas ici exactement le même rôle.

Ici, seule la chambre C travaille véritablement, chaque compression axiale de sa paroi élastique 7 étant suivie par une dilatation axiale élastique de cette paroi : la chambre D, au contraire, ne fait qu'absorber passivement, sans réaction élastique, l'excédent de liquide, de volume variable, qui est chassé vers elle ou aspiré à partir d'elle à travers le canal 13.

Ce comportement, purement de "compensation", de la chambre annulaire D rend possible l'adoption de la caractéristique suivante.

Pour augmenter le nombre des fréquences vis-à-vis desquelles l'amortissement du dispositif selon la direction Y est efficace, on prévoit au moins un canal étroit supplémentaire reliant l'une au moins des deux poches A et B à la chambre annulaire D, et de préférence deux tels canaux 15, 16 affectés respectivement à ces deux poches.

Cette mesure peut être adoptée sans remettre en cause la totale indépendance entre les deux amortissements exercés respectivement selon les deux directions X et Y du fait que la chambre D est une chambre de compensation ne faisant qu'absorber passivement les excédents variables de liquide qui lui sont envoyés sans appliquer aucune réaction élastique sur ces excédents.

Ici encore, et comme pour les canaux précédents 4 et 13, les canaux 15 et 16 sont avantageusement matérialisés par des gorges évidées dans le tronçon tubulaire interne 1₁, tronçon coiffé par des portions en regard de la surface cylindrique interne du tronçon tubulaire externe 1₂ et communiquant avec les poches A et B et la chambre D à travers des lumières radiales évidées dans ledit tronçon tubulaire externe.

Si l'on désire multiplier les fréquences des oscillations vis-à-vis desquelles le manchon est en mesure d'assurer un bon amortissement selon la direction axiale, on peut également multiplier le nombre des canaux étroits reliant entre elles les deux chambres annulaires C et D, éventuellement en divisant l'une au moins de ces deux chambres en au moins deux compartiments distincts reliés respectivement, soit à l'autre chambre, non subdivisée, soit respectivement à des compartiments eux-mêmes divisés de cette autre chambre.

En suite de quoi et quel que soit le mode de réalisation adopté, on dispose finalement d'un manchon amortisseur dont la constitution, le fonctionnement et les avantages (en particulier la possibilité d'assurer un amortissement efficace "bidirectionnel", c'est-à-dire selon deux directions X et Y perpendiculaires entre elles) résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment celles où le manchon considéré permettrait d'assurer un amortissement efficace non seulement "bidirectionnel", mais "tridirectionnel" ou "universel", c'est-à-dire selon trois directions X, Y, Z perpendiculaires entre elles.

Cette variante est illustrée sur les figures 3 et 4.

Selon celle-ci, on remplace les deux chambres A et B diamétralement opposées selon la direction Y par quatre chambres A, B, E et F réparties régulièrement ou non autour de l'axe X et diamétralement opposées deux à deux, savoir les deux chambres A et B selon la direction Y et les deux chambres C et D selon la direction Z, perpendiculaire aux deux directions X et Y, et on relie diamétralement ces chambres deux à deux à l'aide de canaux étroits du genre du canal 4 ci-dessus, ce canal 4 reliant les deux poches A et B et un autre canal du même type 17 reliant entre elles les deux poches E et F.

Chacune de ces quatre poches A, B, E et F peut être reliée la chambre annulaire D par un canal étroit du genre des canaux 15 et 16 ci-dessus, ces canaux étant désignés respectivement par les références 18 et 19 sur la figure 4.

Comme on le voit sur cette figure, il faut bien entendu éviter que les différents canaux se croisent, ce qui conduit à prévoir pour certains d'entre eux des détours leur permettant de contourner les autres canaux.

On peut tirer parti de ces détours pour donner à certains des canaux en question une relativement grande longueur, comme il est recherché pour certaines applications.

Avec une telle variante, on peut assurer un amortissement efficace selon toutes les directions de l'espace, car n'importe quelle direction peut être décomposée en ses trois composantes orientées respectivement selon les trois directions X, Y et Z, et la multiplicité des canaux ci-dessus décrits, associée à la nature purement "compensatoire" de la chambre D dans laquelle débouchent le plupart d'entre eux, permettent d'adapter indépendamment le manchon à l'amortissement de plusieurs types d'oscillations appliquées sur celui-ci selon des directions distinctes.

## Revendications

1. Manchon antivibratoire hydraulique comprenant, d'une part, deux armatures rigides tubulaires (1,2) d'axe X s'entourant l'une l'autre et réunies entre elles par un corps en élastomère (3) conformé de façon à former avec celles-ci au moins deux poches étanches (A,B) opposées diamétralement selon une direction Y perpendiculaire à l'axe X et communiquant entre elles par un canal étroit (4), l'ensemble desdites poches et dudit canal étant rempli de liquide et, d'autre part, à l'une des ses extrémités axiales une chambre annulaire (C) délimitée respectivement par des prolongements (5,6,8) des deux armatures tubulaires, par le corps intermédiaire en élastomère (3) et par une paroi élastique (7) résistante à la compression axiale et interposée axialement entre les prolongements ci-dessus, cette chambre (C) étant reliée par un canal étroit (13) à une chambre déformable (D) et l'ensemble de ces deux chambres (C,D) et du canal (13) qui les réunit étant rempli de liquide, **caractérisé en ce que** la chambre déformable est une chambre de compensation (D) annulaire disposée à l'autre extrémité axiale du manchon et délimitée par le corps intermédiaire en élastomère (3), par des prolongements (10,11) des deux armatures tubulaires et par une membrane flexible annulaire (12) n'opposant qu'une résistance négligeable à la déformation, membrane qui relie entre eux les deux prolongements.

2. Manchon selon la revendication 1, caractérisé en ce que les poches (A,B,E,F) sont au nombre de quatre, réparties autour de l'axe X, les poches diamétralement opposées étant reliées deux à deux par des canaux étroits (4,17).

3. Manchon selon l'une quelconque des précédentes revendications, caractérisé en ce que l'une au moins des poches est reliée à la chambre de compensation (D) par un canal étroit (15,16,18,19).

4. Manchon selon l'une quelconque des précédentes revendications, caractérisé en ce que l'armature tubulaire interne (1) est constituée par deux tronçons de tube (1₁,1₂) emmanchés jointivement l'un dans l'autre et en ce que les différents canaux étroits sont constitués par des rainures évidées dans l'une des deux faces cylindriques juxtaposées des deux tronçons de tube, rainures raccordées à leurs extrémités à des trous radiaux évidés dans le tronçon tubulaire extérieur.

5. Manchon selon la revendication 4, caractérisé en ce que le tronçon tubulaire dans lequel sont évidées les rainures est le tronçon intérieur (1₁).

## Patentansprüche

1. Hydraulische Antischwingungsbuchse, die einerseits zwei starre rohrförmige Armaturen (1, 2) mit der Achse X, von denen die eine die andere umgibt und die miteinander über einen Körper (3) aus elastomerem Material verbunden sind, der so ausgebildet ist, daß er mit diesen wenigstens zwei dichte Taschen (A, B) bildet, die sich in der Richtung Y, die senkrecht zur Achse X verläuft, diametral gegenüberliegen und die untereinander über einen engen Kanal (4) in Verbindung stehen, wobei die Taschen und der Durchlaß mit Flüssigkeit gefüllt sind und andererseits an einem ihrer axialen Enden eine ringförmige Kammer (C) enthält, die durch Verlängerungen (5, 6, 8) der beiden rohrförmigen Armaturen, durch den dazwischenliegenden Körper (3) aus elastomerem Material und durch eine elastiche Wandung (7) begrenzt wird, die widerstandfähig gegen axiale Druckbelastung ist und axial zwischen den erwähnten Verlängerungen eingefügt ist, wobei die Kammer (C) über einen engen Kanal (13) mit einer deformierbaren Kammer (D) verbunden ist und die beiden Kammern (C, D) und der Kanal (13),der sie verbindet, gemeinsam mit Flüssigkeit gefüllt sind, dadurch gekennzeichnet, daß die deformierbare Kammer eine ringförmige Ausgleichskammer (D) ist, die an dem anderen axialen Ende der Buchse angeordnet ist und durch den dazwischenliegenden Körper (3) aus elastomerem Material, durch Verlängerungen (10, 11) der beiden rohrförmigen Armaturen und durch eine biegsame ringförmige Membran (12) begrenzt wird, die der Deformation nur einen vernachlässigbaren Widerstand entgegensetzt und die beiden Verlängerungen miteinander verbindet.

2. Buchse nach Anspruch 1, dadurch gekennzeichnet, daß vier Taschen (A, B, E, F) vorgesehen sind, die um die Achse X verteilt angeordnet sind, wobei die sich diametral gegenüberliegenden Taschen paarweise über enge Kanäle (4, 17) miteinander verbunden sind.

3. Buchse nach einem der vorhergehenden Ansprüche, dadurch gekennzeichnet, daß wenigstens eine der Taschen mit der Ausgleichskammer D über einen engen Kanal (15, 16, 18, 19) verbunden ist.

4. Buchse nach einem der vorhergehenden Ansprüche, dadurch gekennzeichnet, daß die innere rohrförmige Armatur (1) aus zwei Rohrstücken (1₁, 1₂) besteht, die dicht aufeinander aufgeschrumpft sind und daß die verschiedenen engen Kanäle aus Rinnen bestehen, die in einer der beiden nebeneinanderliegenden zylindrischen Oberflächen der beiden Rohrstücke ausgenommen sind, wobei die Rinnen an ihren Enden mit radialen Löchern in Verbindung stehen, die in dem äußeren Rohrstück ausgenommen sind.

5. Buchse nach Anspruch 4, dadurch gekennzeichnet, daß das Rohrstück, in dem die Rinnen ausgenommen sind, das innere Rohrstück (1₁) ist.

## Claims

1. Hydraulic antivibratory sleeve comprising, on the one hand, two rigid tubular frames (1, 2) with axis X, one surrounding the other, joined together by an elastomer body (3) shaped so as to form therewith two sealed pockets (A, B) diametrically opposite in a direction Y perpendicular to axis X and communicating together through a narrow channel (4), the assembly formed by said pockets and said channel being filled with liquid and, on the other hand, at one of its axial ends, an annular chamber (C) defined respectively by extensions (5, 6, 8) of the two tubular frames, by the intermediate elastomer body (3) and by a resilient wall (7) resisting axial compression and inserted axially between the above extensions, this chamber (C) being connected by a narrow channel (13) to a deformable chamber (D) and the assembly formed by these two chambers (C, D) and the channel (13) which joins them together being filled with liquid, characterized in that the deformable chamber is an annular compensation chamber (D) disposed at the other axial end of the sleeve and defined by the intermediate elastomer body (3), by extensions (10, 11) of the two tubular frames and by an annular flexible membrane (12) which only opposes a negligible resistance to deformation, which membrane connects the two extensions together.

2. Sleeve according to claim 1, characterized in that the pockets (A, B, E, F) are four in number, distributed about the axis X, the diametrically opposite pockets being connected together in twos by narrow channels (4, 17).

3. Sleeve according to any one of the preceding claims, characterized in that one at least of the pockets is connected to the compensation chamber (D) by a narrow channel (15, 16, 18, 19).

4. Sleeve according to any one of the preceding claims, characterized in that the internal tubular frame (1) is formed by two tube sections (1₁, 1₂) fitted jointingly one in the other and in that the different narrow channels are formed by grooves hollowed out in one of the two juxtaposed cylindrical faces of the two tube sections, which grooves are connected at their ends to radial holes formed in the external tubular section.

5. Sleeve according to claim 4, characterized in that the tubular section in which the grooves are formed is the internal section (1₁).
